# EUROPÄISCHE PATENTSCHRIFT

(11) **EP 3 609 023 B1**
(45) Veröffentlichungstag und Bekanntmachung des Hinweises auf die Patenterteilung: **15.03.2023**
(21) Anmeldenummer: 18306096.1
(22) Anmeldetag: 10.08.2018
(51) Int. Cl.: H01R 4/02, B23K 20/12, H01R 43/02, H01R 25/16, H01R 4/20

(54) **VERFAHREN UND VORRICHTUNG ZUR HERSTELLUNG EINER ELEKTRISCHEN VERBINDUNG UND ELEKTRISCHE LEITUNG**
METHOD AND DEVICE FOR MAKING AN ELECTRICAL CONNECTION AND AN ELECTRICAL LINE
PROCÉDÉ ET DISPOSITIF DE FABRICATION D'UN RACCORDEMENT ÉLECTRIQUE ET CONDUITE ÉLECTRIQUE

(43) Veröffentlichungstag der Anmeldung: 12.02.2020
(73) Patentinhaber: Nexans, 92400 Courbevoie (FR)
(72) Erfinder: STEINBERG, Helmut, 92721 Störnstein (DE)
(74) Vertreter: Ipsilon

(56) Entgegenhaltungen:
- WO-A1-2017/121989
- DE-B3-102017 114 994
- US-A1- 2011 195 296

## Beschreibung

### Gebiet

Die Erfindung betrifft ein Verfahren und eine Vorrichtung zur Herstellung einer elektrischen Verbindung zwischen einem massiven Leiter und einem Litzenleiter.

### Hintergrund

In Fahrzeugen werden zur Energieübertragung elektrische Leiter benötigt, die besonders bei Elektroantrieben große Querschnitte haben. Leiter aus Aluminium werden insbesondere aus Gewichts- und Kostengründen vermehrt als Ersatz für Kupferleiter verwendet. Haupteinsatzgebiete derartiger Leiter sind beispielsweise die Automobil- und die Flugzeugtechnik. Aus Gewichtsgründen bietet sich deshalb Aluminium als Ersatz für Kupfer als Leitermaterial an. Die geringere elektrische Leitfähigkeit des Aluminiums gegenüber Kupfer spielt für die meisten Anwendungen keine Rolle. Um große Ströme leiten zu können, werden zum Beispiel bei Elektrofahrzeugen starre Stromschienen verbaut, die eine hohe Stromtragfähigkeit bei gleichmäßiger Stromverteilung im Leiter aufweisen. Stromschienen werden deshalb bevorzugt verbaut, vorausgesetzt die zu verbindenden Komponenten bewegen sich nicht relativ zueinander. Bei Elektrofahrzeugen müssen auch relativ zueinander bewegte Teile elektrisch verbunden werden. In der Praxis ist es deshalb häufig notwendig, dass flexible Litzenleiter eingesetzt werden, deren Leiter aus einer Vielzahl von Einzeldrähten aufgebaut ist, die untereinander häufig verdreht und/oder verseilt sind. Dementsprechend ist es erforderlich, Stromschienen mit Litzenleitern elektrisch zu verbinden. Dabei kann es Schwierigkeiten bereiten, dass die Einzeldrähte mit einer Oxidschicht überzogen sind, die die Herstellung einer qualitativ hochwertigen Verbindung erschwert.

Herkömmlicherweise werden Stromschienen mit Litzenleitern mittels Ultraschallschweißen miteinander verbunden. Allerdings ist Ultraschallschweißen ein vergleichsweise aufwändiges Verfahren.

Hiervon ausgehend ist eine Aufgabe der vorliegenden Erfindung, ein alternatives Verfahren zu schaffen, um eines oder mehrere der eingangs genannten Probleme zu überwinden oder zumindest zu verbessern.

### Zusammenfassung der Erfindung

Zur Lösung dieser Aufgabe schlägt die Erfindung nach einem ersten Aspekt ein Verfahren nach Anspruch 1 zur Herstellung einer stoffschlüssigen elektrischen Verbindung zwischen einem massiven Leiter und einer Stirnfläche an einem Ende eines aus einer Vielzahl von Einzeldrähten aufgebauten Litzenleiters.

Rührreibschweißen ist ein robustes und günstiges Verbindungsverfahren, mit welchem eine gute Querleitfähigkeit der einzelnen Litzen des Litzenleiters durch Aufbrechen der Oxidschicht, die sich insbesondere auf Aluminium bildet, gewährleistet ist. Die Verbindung lässt sich darüber hinaus einfach abdichten.

Das erfindungsgemäße Verfahren umfasst weiterhin
- das Erzeugen einer Aufnahme in dem massiven Leiter, in der ein Ende des Litzenleiters aufnehmbar ist,
- das Einfügen des Endes des Litzenleiters in die zuvor erzeugte Aufnahme; und
- das Verbinden des massiven Leiters und des Litzenleiters durch Rührreibschweißen.

Die Aufnahme sorgt für einen guten anfänglichen Kontakt zwischen dem massiven Leiter und dem Litzenleiter, wodurch das Erreichen einer qualitativ guten Verbindung mittels des Rührreibschweißprozesses begünstigt wird.

Das erfindungsgemäße Verfahren umfasst weiterhin
- das Aufstecken einer Hülse auf den Litzenleiter, und
- das Verpressen der Hülse mit dem Litzenleiter.

Die Hülse auf dem Litzenleiter stabilisiert den Litzenleiter in dem Bereich, wo die stoffschlüssige Verbindung mit dem massiven Leiter hergestellt wird. Diese Vorgehensweise kann sich ebenfalls günstig auf die Qualität der stoffschlüssigen Verbindung auswirken.

Mit Vorteil weist ein Ausführungsbeispiel des erfindungsgemäßen Verfahrens weiterhin auf
- das Verschweißen der Einzeldrähte an dem Ende des Litzenleiters untereinander bzw. untereinander und mit der Hülse.

Durch das Verschweißen der Einzeldrähte wird eine gleichmäßige Stromverteilung in dem Litzenleiter erreicht, was sich günstig auf die Stromtragfähigkeit des Litzenleiters auswirkt.

Schließlich wird nach einem zweiten Aspekt der Erfindung eine Vorrichtung zum Herstellen einer stoffschlüssigen Verbindung zwischen einem massiven Leiter und einem Litzenleiter vorgeschlagen, wobei die Vorrichtung eine oder mehrere Halterungen aufweist, die eine Stirnfläche des Litzenleiters in mechanischem Kontakt mit einer Seite des massiven Leiters hält. Die Vorrichtung umfasst ein rotierendes Werkzeug, das auf einer Seite des massiven Leiters aufgedrückt wird, die der Seite gegenüberliegt, wo die Stirnfläche des Litzenleiters mit dem massiven Leiter in mechanischen Kontakt ist, wodurch zwischen dem massiven Leiter und dem Litzenleiters eine stoffschlüssige Verbindung durch Rührreibschweißen herstellbar ist.

Die Vorrichtung ist besonders vorteilhaft für die Herstellung einer stoffschlüssigen Verbindung zwischen einem massiven Leiter und einem Litzenleiter.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1A: eine Draufsicht auf eine Stromschiene;
- Fig. 1B: eine Querschnittsansicht der Stromschiene aus Figur 1A;
- Fig. 2: ein Litzenleiter in einer Seitenansicht;
- Fig. 3: eine schematische Darstellung einer Vorrichtung zum Rührreibschweißen;
- Fig. 4: eine aus einem Litzenleiter und einer Stromschiene bestehende elektrische Leitung; und
- Fig. 5: ein Flussdiagramm eines Verfahrens zur Herstellung einer stoffschlüssigen Verbindung zwischen einem massiven Leiter und einem Litzenleiter.

Gleiche oder ähnliche Elemente sind in den Figuren mit gleichen oder ähnlichen Bezugszeichen versehen.

### Ausführungsbeispiel

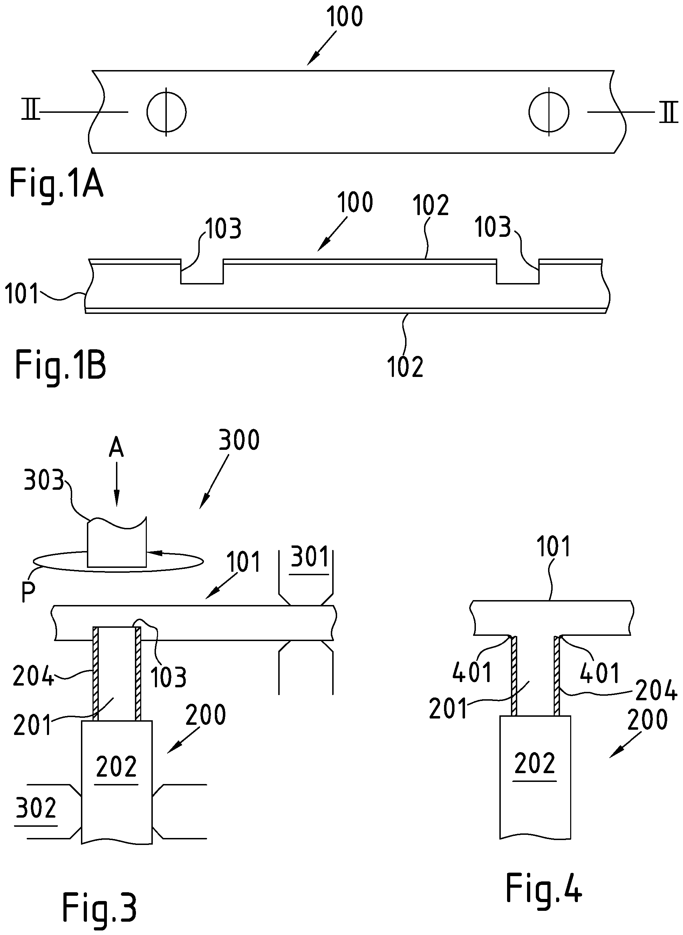

Die Figuren 1A und 1B zeigen schematisch eine Draufsicht bzw. einen Querschnitt einer massiven Stromschiene 100 aus Aluminium, die beispielsweise in einem Elektrofahrzeug dazu eingesetzt wird, um eine elektrische Batterie mit einem Verbraucher, zum Beispiel einem elektrischen Fahrmotor, zu verbinden. In Fahrzeugen werden zur Energieübertragung elektrische Leiter benötigt, die besonders bei Elektroantrieben große Querschnitte haben. Die Stromschiene weist einen massiven Aluminiumstab als elektrischen Leiter 101 auf, der mit einem Mantel 102 (Figur 1B) aus Kunststoff elektrisch isoliert ist. Als Material für den Mantel 102 kommen zum Beispiel PVC, PE, PA und Silikon in Frage. Der elektrische Leiter 101 der Stromschiene 100 kann unterschiedliche Profile aufweisen zum Beispiel ein rundes, rechteckiges oder ein anderes Profil aufweisen, das je nach Anwendungsfall gewählt wird. Für die vorliegende Erfindung spielt der Querschnitt des Profils keine Rolle. Wie einleitend erläutert wurde, ist es bei Elektrofahrzeugen notwendig, relativ zueinander bewegte Teile elektrisch zu verbinden, was in der Regel den Einsatz von flexiblen Litzenleitern erforderlich macht. Eine Leitung, die aus einer Stromschiene und einem flexiblen Litzenleiter aufgebaut ist, soll aber auch in der Lage sein, große Ströme zu transportieren. Dies setzt eine gute stoffschlüssige Verbindung zwischen dem Leiter 101 der Stromschiene 100 und einem Litzenleiter der Litzenleitung voraus, um an der Verbindung eine hohe Stromtragfähigkeit zu erreichen. Im Automobilbau wird die Stromschiene auch häufig als Standardteil für eine ganze Modellreihe hergestellt. Die Verbindung mit Litzenleitern ermöglicht es, dieses Standardteil an die einzelnen Typen der Baureihe auf einfache Weise und kostengünstig anzupassen.

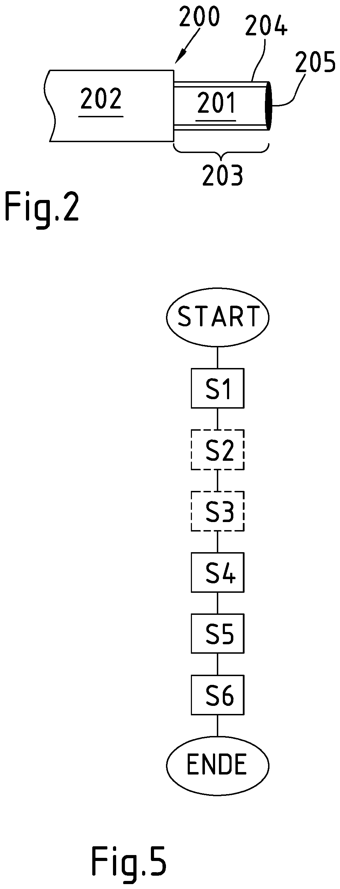

In der Stromschiene 100 sind kreisförmige Aufnahmen 103 für einen Litzenleiter 201 (Figur 2) vorgesehen, wo der Litzenleiter 201 an den Leiter 101 der Stromschiene 100 angeschlossen werden soll.

Figur 1B zeigt die Stromschiene 100 in einem Querschnitt entlang der Linie II - II in Figur 1A. In Figur 1B wird deutlich, dass die Aufnahmen 103 als Vertiefungen ausgebildet sind.

Figur 2 zeigt eine Litzenleitung 200 in einer Ansicht von der Seite. Die Litzenleitung weist einen Leiter 201 auf, der aus einer Vielzahl von Einzeldrähten (nicht dargestellt) gebildet ist, die miteinander verdreht und/oder verseilt sind. Der Litzenleiters 201 ist darüber hinaus mit einem Isoliermantel 202 versehen, der den elektrischen Litzenleiter 201 elektrisch isoliert. Der Isoliermantel 202 ist zum Beispiel aus PVC, PE, PA oder Silikon hergestellt. An dem in Figur 2 rechts liegenden Endabschnitt 203 der Litzenleitung 200 ist der Isoliermantel 202 entfernt. Auf den Litzenleiter 201 ist eine rohrförmige metallische Hülse 204 aufgesteckt und mechanisch mit dem Litzenleiter 201 verpresst bzw. gecrimpt. Bei dem in Figur 2 dargestellten Ausführungsbeispiel ist durch Wärmeeinbringung, beispielsweise über einen Lichtbogen, eine stoffschlüssige Verbindung der Einzeldrähte untereinander sowie mit der Hülse 203 erzielt worden. Die so erzielte Schweißverbindung zwischen den Einzeldrähten und der Hülse ist in Figur 2 durch eine Linse 205 veranschaulicht. Die Linse 205 bildet ein Ende des Litzenleiters. Die beschriebene Schweißverbindung ist jedoch nicht bei allen Anwendungsfällen notwendig.

Figur 3 zeigt schematisch eine Vorrichtung 300, mit welcher eine stoffschlüssige Verbindung zwischen der Litzenleitung 200 und der Stromschiene 100 bzw. zwischen dem massiven Leiter 101 und dem Litzenleiter 201 hergestellt wird. Zu diesem Zweck ist der abisolierte Endabschnitt 203 der Litzenleitung 200 in eine Aufnahme 103 in der Stromschiene 100 eingeführt. Die Stromschiene 100 und die Litzenleitung 200 werden dabei von Halterungen 301 bzw. 302 in Position gehalten. Auf der Seite der Stromschiene 100, die der Litzenleitung 200 gegenüber liegt, wird ein schnell rotierendes Werkzeug 301 gegen die Stromschiene 100 in axialer Richtung gepresst. Die axiale Richtung ist in Figur 3 durch einen Pfeil A angedeutet. Dadurch wird eine stoffschlüssige Verbindung zwischen dem elektrischen Leiter 101 der Stromschiene 100 und dem Litzenleiter 201 der Litzenleitung 200 hergestellt.

Im Einzelnen zeigt Figur 3 ein Werkzeug 301, das aus Stahl hergestellt ist und von einem Motor (nicht gezeigt) in schnelle Rotation versetzt wird. Die Rotationsrichtung des Werkzeugs 301 ist mit einem Pfeil P illustriert. Das Werkzeug wird dann auf den Leiter 101 der Stromschiene 100 aufgesetzt. Dabei verbindet sich das Material des Leiters 101 mit dem Material des Litzenleiters 201 bei einer Temperatur unterhalb der Schmelztemperatur von Aluminium stoffschlüssig bzw. wird durch Diffusion miteinander verschweißt. Dazu tragen auch der durch das Werkzeug 301 aufgebrachte Druck und die dadurch verrichtete Umformarbeit bei. Das bei dem Verfahren eingesetzte Werkzeug hat dementsprechend eine Reibfläche, mit der es auf den Leiter 101 der Stromschiene aufgedrückt wird Beim Aufsetzen des Werkzeugs auf den Leiter 101 ist das Werkzeug 301 mit Vorteil bereits in Rotation versetzt. Es kann aber auch erst nach dem Anlegen an den massiven Leiter in Rotation versetzt werden.

Figur 4 zeigt eine fertiggestellte stoffschlüssige Verbindung zwischen der Litzenleitung 200 und der Stromschiene 100. Zwischen dem massiven Leiter 101 und dem Litzenleiter 201 bzw. der Hülse 204 ist eine Schweißraupe 401 erkennbar, die durch den Rührreibschweißprozeß entstanden ist.

Figur 5 zeigt ein Flussdiagramm, dass die einzelnen Verfahrensschritte zur Herstellung einer erfindungsgemäßen stoffschlüssigen Verbindung durch oder Rührreibschweißen zwischen einem massiven Leiter 101 und einem Litzenleiters 201 veranschaulicht. In einem ersten Schritt S1 wird eine Aufnahme 103 in einem massiven Leiter 101 erzeugt, in welchem das Ende eines Litzenleiters 201 aufnehmbar ist. Optional ist auf einen Endabschnitt 203 des Litzenleiters 201 eine Hülse 204 aufgesteckt (Schritt S2), die auf dem Litzenleiters 201 verpresst bzw. gecrimpt wird (Schritt S3). Da die Schritte S2 und S3 optional sind, sind sie in Figur 5 nur durch gestrichelte Linien dargestellt. Mit Vorteil werden in einem Schritt S4 durch Wärmeeinbringung die Einzeldrähte des Litzenleiters 201 untereinander verschweißt, um eine gute Querleitfähigkeit zwischen den Einzeldrähten des Litzenleiters 201 zu erreichen. In dem Fall, wo auch eine Hülse 204 vorhanden ist, werden die Einzeldrähte in Schritt S4 auch mit der Hülse 204 verschweißt. Der so vorbereitete Litzenleiter 201 wird in Schritt S5 in die Aufnahme 103 in dem massiven Leiter 101 gesteckt. Danach wird in einem Schritt S6 auf der Seite des massiven Leiters 101, die der Seite gegenüber liegt, wo der Litzenleiter in der Aufnahme 103 aufgenommen ist, ein rotierendes Werkzeug 301 auf den massiven Leiter 101 aufgedrückt. Dabei entsteht durch Rührreibschweißen eine stoffschlüssige Verbindung zwischen dem massiven Leiter 101 und dem Litzenleiter 201.

Die beschriebene Reihenfolge der Herstellungsschritte ist nur beispielhaft gemeint. Die Erfindung ist nicht auf diese Reihenfolge beschränkt. Bei anderen Ausführungsbeispielen können die Herstellungsschritte in einer anderen Reihenfolge ausgeführt werden.

Grundsätzlich ist die Erfindung nicht auf Aluminium als Leitermaterial beschränkt. Beispielsweise kann die Erfindung auch bei Leitern aus Kupfer eingesetzt werden. Darüber hinaus ist die Erfindung auch verwendbar, wenn zwischen Leitern aus unterschiedlichen Metallen eine stoffschlüssige Verbindung hergestellt werden soll, zum Beispiel wenn ein Litzenleiter aus Kupfer mit einer Stromschiene aus Aluminium stoffschlüssig verbunden werden soll. Auch andere Kombinationen von Metallen sind bei der Umsetzung der Erfindung möglich.

**Bezugszeichenliste**

| | | | |
|---|---|---|---|
| 100 | Stromschiene | 302 | Halterung |
| 101 | Massiver Leiter | 303 | Rotierendes Werkzeug |
| 102 | Isoliermantel | | |
| 103 | Aufnahme | 401 | Schweißraupe |
| 200 | Litzenleitung | | |
| 201 | Litzenleiter | | |
| 202 | Isoliermantel | | |
| 203 | Endabschnitt | | |
| 204 | Hülse | | |
| 205 | Linse | | |
| 300 | Vorrichtung | | |
| 301 | Halterung | | |

## Patentansprüche

1. Verfahren zur Herstellung einer stoffschlüssigen elektrischen Verbindung zwischen einem massiven Leiter (101) einer Stromschiene (100) und einer Stirnfläche an einem Ende (205) eines aus einer Vielzahl von Einzeldrähten aufgebauten Litzenleiters (201), wobei das Verfahren umfasst
- Erzeugen (S1) einer Aufnahme (103) in dem massiven Leiter (101), in der das Ende (205) des Litzenleiters (201) aufnehmbar ist;
- Aufstecken (S2) einer Hülse auf das Ende (205) des Litzenleiters (201);
- Verpressen (S3) der Hülse (204) mit dem Litzenleiter(201);
- Einfügen (S5) des Endes (205) des Litzenleiters (201) in die zuvor erzeugte Aufnahme (103); und
- Verbinden (S6) des massiven Leiters (101) und des Litzenleiters (201) durch Rührreibschweißen.

2. Verfahren nach Anspruch 1, wobei das Verfahren weiterhin aufweist
- Verschweißen (S4) der Einzeldrähte an dem Ende (205) des Litzenleiters (201) untereinander bzw. untereinander und mit der Hülse (204).

3. Vorrichtung zum Herstellen einer stoffschlüssigen Verbindung zwischen einem massiven Leiter (101) einer Stromschiene (100) und einem Litzenleiter (201), wobei die Vorrichtung (300) eine oder mehrere Halterungen (301,302) aufweist, die eine Stirnfläche des Litzenleiters (201) in mechanischen Kontakt mit einer Seite des massiven Leiters (101) der Stromschiene (100) hält, wobei die Vorrichtung (300) ein rotierendes Werkzeug (303) umfasst, das auf einer Seite des massiven Leiters (101) aufgedrückt wird, die der Seite gegenüberliegt, wo die Stirnfläche des Litzenleiters (201) mit dem massiven Leiter (101) in mechanischen Kontakt ist, wodurch zwischen dem massiven Leiter (101) und dem Litzenleiter (201) eine stoffschlüssige Verbindung durch Rührreibschweißen herstellbar ist.

## Claims

1. A method for producing a material electrical connection between a solid conductor (101) of a busbar (100) and an end face at one end (205) of a stranded conductor (201) made up of a plurality of individual wires, wherein the method comprises
- creating (S1) a receptacle (103) in the solid conductor (101), in which the end (205) of the stranded conductor (201) can be received;
- putting (S2) a sleeve on the end (205) of the stranded conductor (201);
- pressing (S3) the sleeve (204) with the stranded conductor (201);
- inserting (S5) the end (205) of the stranded conductor (201) into the previously created receptacle (103); and
- connecting (S6) the solid conductor (101) and the stranded conductor (201) by means of friction stir welding.

2. The method according to claim 1, wherein the method furthermore comprises
- welding (S4) the individual wires at the end (205) of the stranded conductor (201) to each other or to each other and to the sleeve (204).

3. A device for producing a material connection between a solid conductor (101) of busbar (100) and a stranded conductor (201), wherein the device (300) has one or more holders (301, 302), which hold an end face of the stranded conductor (201) in mechanical contact with a side of the solid conductor (101) of the busbar (100), wherein the device (300) comprises a rotating tool (303), which is pressed on a side of the solid conductor (101), which is opposite to the side, where the end face of the stranded conductor (201) is in mechanical contact with the solid conductor (101), whereby a material connection can be established between the solid conductor (101) and the stranded conductor (201) by means of friction stir welding.

## Revendications

1. Procédé de fabrication d'un raccordement électrique par liaison de matière entre un conducteur massif (101) d'une barre conductrice (100) et une face frontale à une extrémité (205) d'un conducteur torsadé (201) constitué d'une pluralité de fils individuels, dans lequel le procédé comprend
- la réalisation (S1) d'un logement (103) dans le conducteur massif (101), dans lequel l'extrémité (205) du conducteur torsadé (201) peut être logée ;
- l'enfichage (S2) d'une douille sur l'extrémité (205) du conducteur torsadé (201) ;
- la compression (S3) de la douille (204) avec le conducteur torsadé (201) ;
- l'insertion (S5) de l'extrémité (205) du conducteur torsadé (201) dans le logement (103) précédemment réalisé ; et
- le raccordement (S6) du conducteur massif (101) et le conducteur torsadé (201) par soudure par friction-malaxage.

2. Procédé selon la revendication 1, dans lequel le procédé comprend en outre
- le soudage (S4) des fils individuels à l'extrémité (205) du conducteur torsadé (201) entre eux ou entre eux et avec la douille (204).

3. Dispositif pour la fabrication d'un raccordement par liaison de matière entre un conducteur massif (101) d'une barre conductrice (100) et un conducteur torsadé (201), dans lequel le dispositif (300) comprend un ou plusieurs supports (301, 302) qui maintiennent une face frontale du conducteur torsadé (201) en contact mécanique avec un côté du conducteur massif (101) de la barre conductrice (100), dans lequel le dispositif (300) comprend un outil rotatif (303) qui est appuyé contre un côté du conducteur massif (101) opposé au côté où la face frontale du conducteur torsadé (201) est en contact mécanique avec le conducteur massif (101), ce qui permet d'établir, entre le conducteur massif (101) et le conducteur torsadé (201), une liaison par liaison de matière grâce à une soudure par friction-malaxage.
